# DEMANDE DE BREVET EUROPEEN

(11) **EP 0 869 626 A1**
(43) Date de publication de la demande: **07.10.1998**
(21) Numéro de dépôt: 98400780.7
(22) Date de dépôt: 02.04.1998
(51) Int. Cl.: H04B 7/005, H04B 7/26

(54) **Procédé de contrôle de la puissance d'émission de terminaux dans un réseau cellulaire de type CDMA**

(30) Priorité: 03.04.1997 FR 9704075
(71) Demandeur: ALCATEL ALSTHOM COMPAGNIE GENERALE D'ELECTRICITE, 75008 Paris (FR)
(72) Inventeur: Cordier, Christophe, 75017 Paris (FR); Fratti, Marco, 78100 St Germain en Laye (FR)
(74) Mandataire: Feray, Valérie

(57) **Abrégé**

L'invention concerne notamment un procédé de contrôle de la puissance d'émission de terminaux dans un réseau cellulaire de type CDMA. Selon l'invention, lorsque la puissance d'émission d'un nombre n1 de terminaux est autorisée à être globalement augmentée de P dB, il est demandé à un nombre n2 de terminaux, profitant de meilleures qualités de transmission dans le sens montant, de diminuer leur puissance d'émission globale de P dB.

Ceci permet de conserver un niveau d'interférences constant dans le réseau de transmission, soit au niveau d'une cellule unique, soit au niveau d'un groupe de cellules.

## Description

Le domaine de l'invention est celui de la transmission de signaux radioélectriques dans des réseaux cellulaires de type CDMA (Code Division Multiple Access). Plus précisément, la présente invention concerne un procédé de contrôle de la puissance d'émission de terminaux dans un réseau cellulaire de type CDMA, un contrôleur de stations de base ainsi qu'une station de base mettant en oeuvre ce procédé.

Un réseau cellulaire de type CDMA est constitué par une pluralité de cellules dont les couvertures radioélectriques sont assurées par des stations de base. Ces stations de base sont reliées à un contrôleur. A l'intérieur de chaque cellule, des terminaux, par exemple mobiles, communiquent en mode CDMA avec la station de base de cette cellule, c'est à dire qu'en utilisant tous en émission une même bande de fréquence, les données transmises sont étalées par des séquences d'étalement. Ces séquences sont classiquement des séquences PN et statistiquement orthogonales entre elles, afin de limiter les interférences entre des signaux étalés par des séquences différentes.

Dans un tel réseau cellulaire, lorsque les interférences augmentent dans une cellule, les conditions des rapports signal à bruit S/B se dégradent et la station de base de cette cellule demande à chaque terminal actif d'augmenter d'un certain nombre de dB la puissance des signaux qu'il émet. Ces interférences peuvent soit provenir de terminaux émettant dans des cellules adjacentes et rattachés à d'autres stations de base, soit suite à une augmentation du nombre d'utilisateurs dans la cellule concernée. Elles sont dues à la perte de l'orthogonalité statistique des séquences d'étalement en raison des trajets multiples.

Ce problème est évoqué dans la demande de brevet PCT WO 93/09626 intégrée dans son intégralité dans la présente demande par référence.

L'inconvénient de cette solution est que l'augmentation généralisée de la puissance d'émission des terminaux provoque non seulement des interférences dans la cellule considérée mais génère également des interférences accrues dans les cellules adjacentes. Les stations de base de ces cellules adjacentes vont alors également demander aux terminaux avec lesquels elles communiquent d'augmenter leurs puissances d'émission afin de remédier à ces interférences. Ce mécanisme peut alors très rapidement mener à une escalade jusqu'à ce que tous les terminaux de l'ensemble du réseau CDMA aient atteint leur puissance d'émission maximale, ce qui a pour conséquence une totale paralysie du système.

La présente invention a notamment pour objectif de remédier à cet inconvénient.

Plus précisément, un des objectifs de l'invention est de fournir un procédé de contrôle des puissances d'émission de terminaux dans un réseau cellulaire de type CDMA évitant de mener à une paralysie du système de communication.

Un autre objectif de l'invention est de fournir une station de base et un contrôleur de stations de base mettant en oeuvre ce procédé.

Ces objectifs, ainsi que d'autres qui apparaîtront par la suite, sont atteints grâce à un procédé de contrôle de la puissance d'émission de terminaux dans un réseau cellulaire de type CDMA, ce procédé étant caractérisé en ce que, lorsque la puissance d'émission d'un nombre n1 de terminaux est autorisée à être globalement augmentée de P dB, il consiste à ordonner à un nombre n2 de terminaux, profitant de meilleures qualités de transmission dans le sens montant, de diminuer leur puissance d'émission globale de P dB.

On entend par augmentation globale de puissance d'émission la somme des augmentations de puissance des n1 terminaux. De même, la diminution de puissance d'émission globale correspond à la somme des diminutions des puissances d'émission des n2 terminaux. Ainsi, un équilibre est obtenu entre les augmentations et diminutions de puissance des terminaux, ce qui permet de conserver un niveau d'interférence constant dans la ou les cellules considérées.

Avantageusement, les n2 terminaux sont ceux bénéficiant des meilleures qualités de transmission dans le sens montant. On pénalise ainsi seulement les terminaux bénéficiant déjà des meilleures qualités de transmission.

Le critère de qualité permettant de définir les qualités de transmission dans le sens montant est préférentiellement le rapport signal à bruit S/B, proportionnel à Eb/No, l'énergie reçue par bit d'information divisée par la densité spectrale de puissance de bruit. Cette densité spectrale de puissance de bruit est la somme des contributions du bruit thermique et des interférences.

Le procédé de l'invention s'applique avantageusement à des terminaux mobiles. Il peut être mis en oeuvre dans une station de base d'un réseau cellulaire de type CDMA ou alors dans un contrôleur de stations de base d'un tel réseau.

Préférentiellement, le procédé de l'invention est mis en oeuvre lorsque le niveau moyen de puissance totale reçue au niveau de la station de base dépasse une première valeur de seuil ou lorsque la somme des puissances d'émission des terminaux dépasse une deuxième valeur de seuil.

L'invention concerne également une station de base d'un réseau cellulaire de type CDMA dans lequel des terminaux sont destinés à communiquer. Cette station de base comporte des moyens pour attribuer à un nombre n1 de terminaux bénéficiant de qualités de transmission dans le sens montant insuffisantes une ressource de puissance d'émission globale égale à la somme des diminutions de puissance demandées à un nombre n2 de terminaux bénéficiant de meilleures qualités de transmission dans le sens montant.

L'invention concerne également un contrôleur de stations de base d'un réseau cellulaire de type CDMA dans lequel des terminaux sont destinés à communiquer. Ce contrôleur comporte des moyens pour attribuer à un nombre n1 de terminaux bénéficiant de qualités de transmission dans le sens montant insuffisantes une ressource de puissance d'émission globale égale à la somme des diminutions de puissance demandées à un nombre n2 de terminaux bénéficiant de meilleures qualités de transmission dans le sens montant.

D'autres caractéristiques et avantages de l'invention apparaîtront à la lecture de la description suivante d'un mode de mise en oeuvre préférentiel, donné à titre illustratif et non limitatif, et des dessins annexés dans lesquels :
- la figure 1 est un organigramme montrant les différentes étapes d'une mise en oeuvre préférentielle du procédé selon l'invention ;
- la figure 2 représente une table où, à chacun des terminaux actifs dans le réseau, est affectée une mesure de puissance d'émission et de rapport signal à bruit ;
- la figure 3 représente schématiquement un réseau cellulaire de type CDMA.

Le procédé de l'invention a pour finalité l'obtention d'un niveau d'interférences constant dans un réseau cellulaire, soit au niveau d'une cellule unique couverte par une station de base, soit au niveau d'un groupe de cellules couvertes par plusieurs stations de base raccordées à un contrôleur. A cet effet, l'invention propose de contrôler la puissance d'émission des terminaux actifs dans une cellule ou dans un groupe de cellules en compensant une augmentation de la puissance d'émission d'un certain nombre de terminaux, dont les qualités de communication dans le sens montant (des terminaux vers les stations de base) sont faibles, par une diminution correspondante de la puissance d'émission de terminaux jouissant de meilleures conditions de communication dans le sens montant. On maîtrise ainsi la puissance d'émission globale des terminaux actifs dans la ou les cellules considérées et le niveau d'interférence reste constant.

Les rapports signal à bruit (S/B ou Eb/No) mesurés ou estimés constituent un critère de qualité de communication particulièrement intéressant. Il est cependant possible d'utiliser un autre critère d'appréciation des qualités de communication des terminaux vers la ou les stations de base, par exemple la puissance du signal reçu.

Dans la suite de cette description, le critère de qualité retenu pour estimer la qualité d'une communication dans le sens montant est le rapport signal à bruit. L'obtention de ce rapport signal à bruit au niveau de la station de base sera expliqué par la suite.

A titre d'exemple, si les conditions de transmission exigent qu'un nombre n1 = 3 de terminaux défavorisés par leurs conditions de transmission doivent augmenter leur puissance d'émission, l'un de 0,5 dB et les deux autres de 0,25 dB, soit une augmentation de puissance globale de 1 dB, la puissance d'émission de n2 = 4 terminaux (par exemple) mieux favorisés par les conditions de transmission sera diminuée de 0,25 dB, pour que l'augmentation de puissance d'émission allouée soit exactement compensée par la diminution de puissance demandée. Il est bien entendu possible de répartir différemment les diminutions de puissance au niveau des terminaux bénéficiant de meilleurs rapports Eb/No, par exemple en demandant au terminal dont le rapport Eb/No est le plus important parmi les n2 de supporter une plus grande diminution de puissance d'émission que les autres (n2 - 1) terminaux. Les nombres n1 et n2 sont notamment fonction du nombre de terminaux actifs, de l'augmentation de puissance globale nécessaire et des qualités des communications actives. Le nombre n1 dépend quant à lui de la valeur du seuil fixé de rapport Eb/No à partir duquel une qualité de communication est jugée insuffisante.

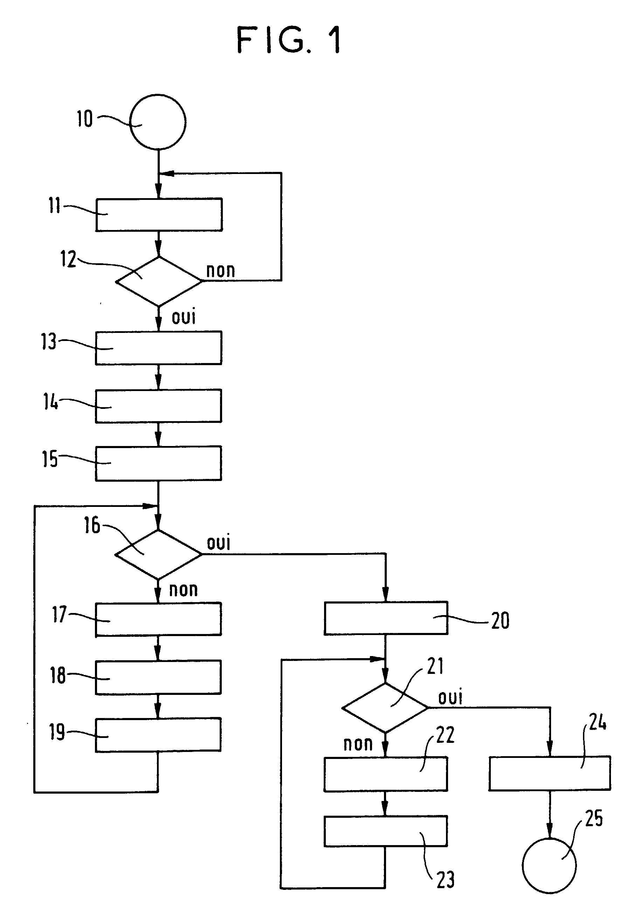

La figure 1 est un organigramme montrant les différentes étapes d'une mise en oeuvre préférentielle du procédé selon l'invention.

On considère dans un premier temps que le procédé de l'invention est appliqué à une seule et unique cellule d'un réseau CDMA. L'étape 10 est une étape de début. A l'étape 11, la puissance d'émission globale des terminaux actifs dans la cellule considérée est acquise. Ces terminaux sont ceux qui communiquent avec la station de base de cette cellule. Deux modes de mise en oeuvre sont possibles : la puissance d'émission globale peut être soit le résultat d'une mesure de la puissance des signaux reçus au niveau de la station de base, soit celui d'une estimation de cette puissance réalisée à partir des instructions d'augmentation ou de diminution de puissance précédemment transmises aux terminaux. Pour cette estimation, la station de base comporte une table faisant correspondre à chaque terminal actif le niveau de puissance d'émission alloué à ce terminal. La somme de ces niveaux de puissance correspond au résultat de l'estimation. La mesure de la puissance des signaux reçus constitue un mode de mise en oeuvre préférentiel car elle permet de connaître précisément le niveau d'interférences atteint alors que l'estimation précitée ne tient pas compte des conditions de propagation.

A l'étape 12, la puissance acquise est comparée avec une valeur de seuil. Ce test consiste donc soit à comparer le niveau de puissance totale reçue au niveau de la station de base avec une première valeur de seuil, soit le résultat de l'estimation avec une deuxième valeur de seuil. En cas de non-dépassement de la valeur de seuil, le niveau d'interférences dans la cellule considérée est jugé suffisamment bas pour ne pas être susceptible d'engendrer une escalade et on repasse à l'étape 11.

Si la valeur de seuil est dépassée, on considère qu'il est nécessaire de maintenir constant le niveau d'interférences dans la cellule car il existe un risque de paralysie du système. Le procédé de l'invention propose alors, à partir de l'étape 13, de sélectionner un nombre n2 de terminaux actifs dans la cellule, ces n2 terminaux profitant de bons, sinon des meilleurs, rapports signal à bruit, et de demander à ces terminaux de diminuer leur puissance d'émission globale d'un nombre P de décibels, cette diminution de puissance étant ou non partagée équitablement entre ces n2 terminaux. En parallèle, la puissance d'émission d'un nombre n1 de terminaux, dont les rapports signal à bruit sont plus faibles, est autorisée à être globalement augmentée de la même quantité P de décibels, la répartition des décibels alloués à ces n1 terminaux moins favorisés par les conditions de transmission étant ou non réalisée de manière équitable.

A cet effet, la station de base assurant la couverture de la cellule comporte une table faisant correspondre à chaque terminal non seulement la puissance d'émission allouée à ce terminal, mais également un critère de qualité de communication dans le sens montant, ce critère étant par exemple le rapport Eb/No mesuré ou estimé pour ce terminal.

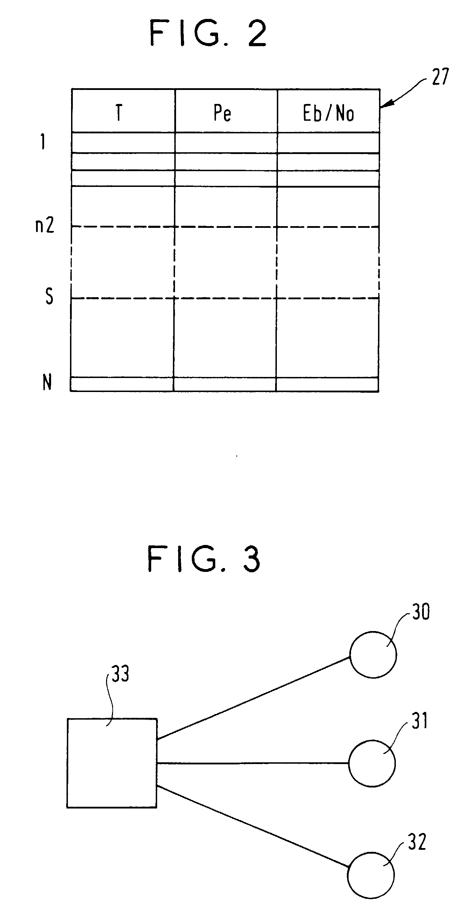

Une telle table, référencée 27, est représentée à la figure 2, T représentant la colonne d'identification des terminaux, Pe la puissance d'émission allouée à chacun d'eux et Eb/No le critère de qualité retenu. Si le rapport Eb/No d'un terminal est grand, cela signifie que la qualité de la communication de la voie montante (du terminal vers la station de base) est bonne, et réciproquement. Cette table est préférentiellement réordonnée à chaque changement de rapport Eb/No afin de classer les terminaux en fonction des conditions de transmission dont ils bénéficient, par exemple pour disposer en haut de table des terminaux les plus favorisés en terme de qualité de transmission.

Plus précisément, l'étape 13 consiste à mettre à jour la table des rapports Eb/No et à classer les terminaux en fonction des Eb/No décroissants. Les terminaux bénéficiant des conditions de transmission les plus favorables sont alors situés en haut de la table et ceux des conditions de transmission les moins favorables en bas de la table. N terminaux sont considérés comme actifs et chaque terminal est identifié par un indice i, avec i variant de 1 à N. L'étape 14 consiste ensuite à déterminer une valeur de seuil S de référence correspondant au rapport Eb/No en-deça duquel il est considéré qu'un terminal doit pouvoir être autorisé à augmenter sa puissance d'émission. La figure 2 fait apparaître ce seuil.

L'étape 15 est une étape d'initialisation consistant à affecter à un index la valeur de l'indice, dans la table de la figure 2, du premier terminal ayant un rapport Eb/No inférieur à la valeur de seuil S. La valeur d'un accumulateur Δₜₒₜ est mise à zéro. A l'étape 16 il est testé si la valeur de l'indice i est égale à N. Si la réponse est non, à l'étape 17 la puissance d'émission du mobile d'indice i est programmée pour être ultérieurement augmentée d'une quantité Δ (Pᵢ = Pᵢ + Δ). Cette quantité Δ est ici prédéfinie et correspond par exemple à une augmentation de puissance d'émission de 0,25 dB. A L'étape 18, Δₜₒₜ est augmenté de la quantité Δ et à l'étape 19 l'index i est augmenté de 1. Le test de l'étape 16 est alors relancé.

Si la réponse au test de l'étape 16 est oui, cela signifie que les puissances d'émission de tous les terminaux présentant un rapport Eb/No inférieur à la valeur de seuil S sont programmées pour être augmentées chacune de la quantité Δ. Ces terminaux sont au nombre de n1. Le procédé se poursuit alors à l'étape 20 (étape d'initialisation) où l'index i est mis à 1 (positionnement en haut de la table 27) et où une quantité Δ égale à Δₜₒₜ/n2 est calculée. L'étape 21 consiste à tester si la valeur de l'index est égale à n2. Si la réponse est non, la puissance d'émission du terminal d'indice i est programmée pour être ultérieurement diminuée d'une quantité Δ (Pᵢ = Pᵢ - Δ) (étape 22). A l'étape 23, l'index i est augmenté de 1. Le test de l'étape 21 est alors relancé.

Si la réponse à l'étape 21 est oui, cela signifie que la somme des augmentations de puissance programmées est égale à la somme des diminutions de puissance programmées et que l'objectif visé est atteint. Il reste alors à transmettre les instructions d'augmentation et de diminution de puissance aux terminaux (étape 24), avant de clore le traitement proposé (étape de fin 25). Le procédé pourra reprendre ultérieurement à l'étape 10.

Dans ce mode de mise en oeuvre, les n2 terminaux les plus favorisés par les conditions de transmission partagent équitablement une diminution de puissance requise par une augmentation de puissance, également équitablement partagée, d'un nombre n1 de terminaux les moins favorisés. Les pas d'augmentation et de diminution de puissance sont variables ou fixes (par exemple de ±0,25 dB).

Dans le mode de mise en oeuvre préférentiel donné ci-dessus, ce sont les terminaux qui bénéficient des meilleurs rapports signal à bruit qui se voient imputer une baisse de puissance d'émission, au profit des terminaux dont les rapports signal à bruit sont les plus faibles ou tout du moins de ceux dont on veut augmenter la puissance d'émission.

L'obtention de la valeur du rapport Eb/No correspondant à un terminal peut s'effectuer de différentes manières : il est par exemple possible de comparer un signal inséré cycliquement dans le signal utile avec un signal de référence, analyser un signal transmis sur la séquence pilote, ou alors comparer le signal utile désétalé avec le signal reçu avant désétalement pour estimer le rapport signal à bruit. Cette technique est par exemple décrite dans l'article "Closed-loop Power Control in CDMA Systems" de C.C. LEE et R. STEELE, IEE Proc. Commun., vol. 143, n°4, août 1996. D'autres techniques existantes peuvent être mises en oeuvre.

L'invention s'applique indifféremment aux réseaux assurant la couverture de terminaux fixes ou mobiles. Dans le cas de terminaux mobiles, c'est essentiellement la mobilité des terminaux qui engendre une gestion des puissances d'émission alors que dans le cas de terminaux fixes, c'est la connexion et la déconnexion des terminaux au réseau qui demande cette gestion.

L'invention concerne également, dans un deuxième temps, le contrôle de la puissance d'émission de terminaux au niveau d'un groupe de cellules. Dans ce cas, plusieurs stations de base telles que décrites précédemment transmettent les données figurant dans les tableaux de la figure 2 à un contrôleur de ces stations de base. Ce contrôleur, référencé 33 sur la figure 3, en tenant compte de l'ensemble des données reçues, prend alors les décisions d'augmenter et de diminuer les puissances d'émission des terminaux conformément au procédé de l'invention et les stations de base 30 à 32 retransmettent les instructions du contrôleur aux terminaux.

L'invention concerne également une station de base d'un réseau cellulaire de type CDMA dans lequel des terminaux sont destinés à communiquer. Cette station de base comporte des moyens pour attribuer à des terminaux bénéficiant de qualités de transmission dans le sens montant insuffisantes une ressource de puissance d'émission globale égale à la somme des diminutions de puissance demandées à des terminaux bénéficiant de meilleures qualités de transmission dans le sens montant.

L'invention concerne également un contrôleur de stations de base d'un réseau de type CDMA, ce contrôleur comportant des moyens pour attribuer à des terminaux bénéficiant de qualités de transmission dans le sens montant insuffisantes une ressource de puissance d'émission globale égale à la somme des diminutions de puissance demandées à des terminaux bénéficiant de meilleures qualités de transmission dans le sens montant.

Comme indiqué précédemment, les terminaux dont les puissances d'émission sont diminuées sont préférentiellement ceux bénéficiant des meilleures conditions de transmission dans le sens montant mais il est également possible de diminuer les puissances d'émission de terminaux bénéficiant simplement de meilleures conditions de transmission dans le sens montant.

La transmission peut être purement de type CDMA ou alors, en conservant son caractère d'étalement de spectre, être associée à d'autres procédés de transmission, par exemple de type TDMA.

## Revendications

1. Procédé de contrôle de la puissance d'émission de terminaux dans un réseau cellulaire de type CDMA, caractérisé en ce que, lorsque la puissance d'émission d'un nombre n1 desdits terminaux est autorisée à être globalement augmentée de P dB, il consiste à ordonner à un nombre n2 desdits terminaux, profitant de meilleures qualités de transmission dans le sens montant, de diminuer leur puissance d'émission globale de P dB.

2. Procédé selon la revendication 1, caractérisé en ce que lesdits n2 terminaux sont ceux bénéficiant des meilleures qualités de transmission dans ledit sens montant.

3. Procédé selon l'une des revendications 1 et 2, caractérisé en ce que le critère de qualité permettant de définir lesdites qualités de transmission dans ledit sens montant est le rapport Eb/No.

4. Procédé selon l'une des revendications 1 à 3, caractérisé en ce que lesdits terminaux sont mobiles.

5. Procédé selon l'une des revendications 1 à 4, caractérisé en ce qu'il est appliqué dans une station de base (30, 31, 32) d'un réseau cellulaire de type CDMA.

6. Procédé selon l'une des revendications 1 à 4, caractérisé en ce qu'il est appliqué dans un contrôleur (33) de stations de base (30, 31, 32) d'un réseau cellulaire de type CDMA.

7. Procédé selon l'une des revendications 1 à 5, caractérisé en ce qu'il est mis en oeuvre lorsque le niveau moyen de puissance totale reçue au niveau de la station de base (30, 31, 32) dépasse une première valeur de seuil.

8. Procédé selon l'une des revendications 1 à 6, caractérisé en ce qu'il est mis en oeuvre lorsque la somme des puissances d'émission desdits terminaux dépasse une deuxième valeur de seuil.

9. Station de base (30, 31, 32) d'un réseau cellulaire de type CDMA dans lequel des terminaux sont destinés à communiquer, caractérisée en ce qu'elle comporte des moyens pour attribuer à un nombre n1 de terminaux bénéficiant de qualités de transmission dans le sens montant insuffisantes une ressource de puissance d'émission globale égale à la somme des diminutions de puissance demandées à un nombre n2 de terminaux bénéficiant de meilleures qualités de transmission dans ledit sens montant.

10. Contrôleur (33) de stations de base d'un réseau de type CDMA, caractérisé en ce qu'il comporte des moyens pour attribuer à un nombre n1 de terminaux bénéficiant de qualités de transmission dans le sens montant insuffisantes une ressource de puissance d'émission globale égale à la somme des diminutions de puissance demandées à un nombre n2 de terminaux bénéficiant de meilleures qualités de transmission dans ledit sens montant.
